(19) Europäisches Patentamt
European Patent Office
Office européen des brevets

(11) **EP 3 469 441 B1**

(12) **FASCICULE DE BREVET EUROPEEN**

(45) Date de publication et mention
de la délivrance du brevet:
**07.10.2020 Bulletin 2020/41**

(21) Numéro de dépôt: **17742469.4**

(22) Date de dépôt: **06.06.2017**

(51) Int Cl.:
**G05D 1/02** *(2020.01)*       **G01S 17/66** *(2006.01)*

(86) Numéro de dépôt international:
**PCT/FR2017/051427**

(87) Numéro de publication internationale:
**WO 2017/216447 (21.12.2017 Gazette 2017/51)**

(54) **MACHINE A GUIDAGE AUTONOME**

AUTONOM GEFÜHRTE MASCHINE

AUTONOMOUSLY GUIDED MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2016 FR 1655510**

(43) Date de publication de la demande:
**17.04.2019 Bulletin 2019/16**

(73) Titulaire: **INRIA - Institut National de Recherche en Informatique et en Automatique**
**78150 Le Chesnay (FR)**

(72) Inventeurs:
• **VASQUEZ-GOVEA, Alejandro Dizan**
**Palo Alto**
**California 34306 (US)**
• **MICHALCZYK, Jan**
**38000 Grenoble (FR)**
• **BORKOWSKI, Stanislas**
**38190 Brignoud (FR)**

(74) Mandataire: **Cabinet Netter**
**36, avenue Hoche**
**75008 Paris (FR)**

(56) Documents cités:
**WO-A1-2014/033055     ES-A1- 2 401 509**
**GB-A- 2 374 228**

• **Matej Mesko ET AL: "LASER SPOT DETECTION", Journal of Information, Control and Management Systems, 31 janvier 2013 (2013-01-31), page 35, XP055345192, Extrait de l'Internet: URL:http://stefantoth.com/content/papers/Mesko-Toth-LaserSpotDetection.pdf [extrait le 2017-02-10]**
• **A. MOLDER ET AL: "Laser Line Detection with Sub-Pixel Accuracy", ELEKTRONIKA IR ELEKTROTECHNIKA - ELECTRONICS AND ELECTRICAL ENGINEERING, vol. 20, no. 5, 19 mai 2014 (2014-05-19), XP055345188, KAUNAS, LT ISSN: 1392-1215, DOI: 10.5755/j01.eee.20.5.7114**

**Description**

L'invention concerne le domaine des machines, notamment agricoles, plus particulièrement maraîchères ou horticoles.

Le maraîchage ou l'horticulture mécanisé requiert en général un conducteur d'engin et un ou plusieurs opérateurs installés à l'arrière pour réaliser le travail maraîcher tel que plantation, bouturage, repiquage, taille, récolte, etc. Les opérateurs sont assis ou couchés sur l'engin proprement dit ou un support porté ou traîné par l'engin, l'ensemble formant une machine maraîchère opérationnelle. La vitesse d'avancement de la machine est très lente. D'autres travaux sont effectués par un outil entraîné par l'engin avec un conducteur seul.

Le poste de conducteur nécessite une attention très soutenue pour ne pas abîmer les cultures disposées en rangs parallèles. Par ailleurs, la conduite en terrain de culture, naturellement irrégulier, transmet au conducteur des vibrations et secousses néfastes pour la santé. ES 2 401 509 propose un système de guidage par faisceau laser ponctuel reçu par un écran et une caméra associée à un algorithme de vision artificielle.

Le besoin existe de passer à un guidage autonome de la machine afin de gagner en précision de conduite et réduire les coûts de production.

La présente invention vient améliorer la situation des machines de précision, notamment agricoles. Une machine à guidage autonome comprend au moins un organe directeur et un mécanisme de direction. La machine à guidage autonome comprend un système de guidage comprenant un filtre optique muni d'une face de réception exposée à l'extérieur et capable de transmettre les rayons lumineux dirigés sensiblement selon une direction et d'éliminer les autres rayons lumineux, un écran recevant la lumière filtrée, une caméra numérique de prise d'images résolues en pixels dudit écran, un organe de prétraitement capable de sélectionner les pixels correspondant à un faisceau laser plan incident reçu par le système de guidage, filtré et projeté sur ledit écran, et de générer une image de réponse de détection, un détecteur de lignes générant à partir de générer une image de réponse de détection, un détecteur de lignes générant à partir de l'image de réponse de détection par un traitement sur les colonnes de pixels une estimation J des coordonnées des lignes détectées et un localisateur recevant l'estimation des coordonnées des lignes détectées et calculant des valeurs représentatives de colonnes de pixels à partir de ladite estimation des coordonnées des lignes détectées et de paramètres du système de guidage, puis calculant une distance $y_w$ du système de guidage par rapport au faisceau laser plan pour commander le mécanisme de direction afin de minimiser ladite distance $y_w$.

Grâce à l'invention, la machine se recentre sur sa trajectoire idéale sans conducteur. Une précision de l'ordre de 0,5 pour 1000, soit 5 cm à 100 mètres, est rendue possible, c'est-à-dire que la machine parvient à rester avec un écart inférieur ou égal à 5 cm par rapport à la position idéale à une distance de 100 m de la source du faisceau laser, l'écart angulaire se conservant sensiblement avec la distance. Les écarts sont réduits d'où une meilleure précision des travaux et une réduction des pertes de culture.

Dans un mode de réalisation, le filtre optique comprend une structure en nid d'abeille à alvéoles traversantes pour transmettre les rayons lumineux dirigés selon l'axe des alvéoles traversantes. Le filtre optique est de structure robuste.

On entend par écran semi-opaque un écran agencé de manière à laisser passer une partie de la lumière, mais en même temps permettre une interception d'une autre partie de la lumière à l'intersection dudit écran et du faisceau laser.

Dans un mode de réalisation, l'image de réponse de détection est mono canal et chaque pixel de ladite image de réponse de détection présente une valeur fonction de la probabilité que ledit pixel appartienne ou non à la ligne du faisceau laser. L'image de réponse de détection est compacte en termes de volume de données.

Dans un mode de réalisation, l'organe de prétraitement comprend un convertisseur de couleurs primaires rouge-vert-bleu en Teinte Saturation Valeur (TSV) convertissant chaque pixel de l'image de sortie de la caméra en un pixel d'une image TSV, un égaliseur pour chacun des canaux de saturation et de valeur de l'image TSV, et un calculateur de fonction exponentielle de la distance Euclidienne pondérée entre un pixel TSV et un pixel de référence :

$$O_{i,j} = e^{-(w_H(I^H_{i,j}-L^H)^2 + w_S(I^S_{i,j}-L^S)^2 + w_V(I^V_{i,j}-L^V)^2)}$$

Avec $O_{i,j}$ la valeur du pixel de coordonnées i et j de l'image mono canal de sortie de prétraitement ; $w_H$, $w_S$, $w_V$ les pondérations pour les canaux H, S, V ; $I^H_{i,j}$, $I^S_{i,j}$, $I^V_{i,j}$ la valeur du pixel d'entrée dans chaque canal ; $L^H$, $L^S$, $L^V$ la valeur du pixel de référence dans chaque canal.

Le prétraitement est rapide.

Le convertisseur de couleurs primaires rouge-vert-bleu en Teinte Saturation Valeur (TSV) rend plus aisée l'identification de la couleur.

Dans un mode de réalisation, le détecteur de lignes comprend :

un sommateur de colonnes effectuant l'addition des pixels de chaque colonne de ladite image de réponse de détection pour obtenir un paramètre de colonne $C_j = \sum_i O_{i,j}$ ;

un filtre passe-haut éliminant les colonnes dont le paramètre est inférieur au produit $\tau C_{max}$ du maximum $C_{max}$ desdits paramètres $C_j$ de colonne par un coefficient de filtrage $\tau$ choisi, pour sélectionner les colonnes pertinentes ; et

un pondérateur effectuant le rapport de la somme des paramètres $C_j$ des colonne pertinentes pondérés par leur index j dans l'image de sortie de la caméra, par la somme des paramètres $C_j$ des colonnes pertinentes pour obtenir une valeur J d'index de colonne estimative des coordonnées du faisceau laser plan incident dans l'image de sortie de la caméra: $J = \sum_j jC_j / \sum_j C_j$.

Le détecteur de lignes génère un index de colonne hautement représentatif.

Le coefficient de filtrage $\tau$ peut être constant.

Dans un mode de réalisation, le localisateur comprend un calculateur de la distance $y_w$ du système de guidage par rapport au faisceau laser plan en fonction de l'estimation J des coordonnées des lignes détectées, d'un paramètre m de distance entre l'écran et le filtre optique et d'un paramètre b de centrage de l'écran avec $y_w = m\,J+b$. Le calcul de la distance $y_w$ est simple.

Dans un mode de réalisation, le paramètre de distance est constant. L'écran peut être stationnaire par rapport au système de guidage.

Dans un mode de réalisation, l'écran est plan. L'écran est simple et le système de guidage compact.

Dans un mode de réalisation, l'écran est adjacent au filtre optique.

Dans un mode de réalisation, l'écran comprend deux parties parallèles, échelonnées selon la direction de propagation du faisceau laser incident de manière que le localisateur calcule un écart angulaire $\alpha$ du système de guidage par rapport au faisceau laser plan pour commander le mécanisme de direction. Le système de guidage est différentiel, d'où une précision améliorée en distance et la possibilité de calculer un angle entre le système de guidage et le faisceau incident.

Dans un mode de réalisation, le localisateur après le calcul des valeurs représentatives de colonnes de pixels, calcule l'écart angulaire $\alpha$ du système de guidage par rapport au faisceau laser plan pour commander le mécanisme de direction afin de minimiser ladite distance $y_w$. La convergence de la machine est plus rapide.

Dans un mode de réalisation, le localisateur comprend un calculateur de la distance $y_w$ du système de guidage par rapport au faisceau laser plan en fonction de l'estimation $J_1$ des coordonnées des lignes détectées sur la première partie de l'écran, d'un paramètre $m_1$ de distance entre la première partie de l'écran et le filtre optique et d'un paramètre $b_1$ de centrage de la première partie de l'écran avec $y_1 = m_1\,J_1+b_1$, de l'estimation $J_2$ des coordonnées des lignes détectées sur la deuxième partie de l'écran, d'un paramètre $m_2$ de distance entre la deuxième partie de l'écran et le filtre optique et d'un paramètre $b_2$ de centrage de la deuxième partie de l'écran avec $y_2 = m_2\,J_2+b_2$, la distance $y_w$ étant la moyenne des distances $y_1$ et $y_2$. La distance calculée est précise.

Dans un mode de réalisation, le localisateur comprend un calculateur de l'angle entre le plan du faisceau laser et l'axe du système de guidage avec $\alpha = \text{Atan2}(y_2-y_1;\ x_1+x_2)$, ledit axe étant normal à chaque partie de l'écran. Ayant estimé la distance et l'angle à ramener à zéro, la correction sur le mécanisme de direction est plus rapide.

Un ensemble de guidage de machine comprend un système de guidage mobile et un émetteur stationnaire de faisceau laser plan. Le système de guidage comprend un filtre optique muni d'une face de réception exposée à l'extérieur et capable de transmettre les rayons lumineux dirigés sensiblement selon une direction et d'éliminer les autres rayons lumineux, un écran recevant la lumière filtrée, une caméra numérique de prise d'images résolues en pixels dudit écran, un organe de prétraitement capable de sélectionner les pixels correspondant à un faisceau laser plan incident reçu par le système de guidage, filtré et projeté sur ledit écran, et de générer une image de réponse de détection, un détecteur de lignes générant à partir de l'image de réponse de détection par un traitement sur les colonnes de pixels une estimation J des coordonnées des lignes détectées et un localisateur recevant l'estimation des coordonnées des lignes détectées et calculant des valeurs représentatives de colonnes de pixels à partir de ladite estimation des coordonnées des lignes détectées et de paramètres du système de guidage, puis calculant une distance $y_w$ du système de guidage par rapport au faisceau laser plan pour générer une commande minimisant ladite distance $y_w$. L'ensemble peut être adapté à des engins agricoles existants.

D'autres caractéristiques et avantages de l'invention apparaîtront à l'examen de la description détaillée ci-après, et des dessins annexés, sur lesquels :

- la figure 1 illustre de façon schématique une machine selon l'invention,
- la figure 2 illustre de façon schématique, l'alignement du système de guidage,
- la figure 3 illustre de façon schématique un filtre optique vu par la caméra,
- la figure 4 illustre de façon schématique le système de guidage, dans une vue en coupe transversale,
- la figure 5 illustre de façon schématique, le système de guidage, dans une vue en coupe longitudinale,
- la figure 6 est un diagramme fonctionnel du système de guidage,

- la figure 7 est un diagramme fonctionnel de l'organe de prétraitement,
- la figure 8 est un diagramme fonctionnel du détecteur de lignes et du localisateur,
- la figure 9 est une image de sortie de caméra,
- la figure 10 est une image de sortie de l'organe de prétraitement,
- la figure 11 est une superposition de l'image de sortie de caméra et de la ligne détectée, et
- la figure 12 illustre de façon schématique une machine à écran et filtre décalés.

Les dessins annexés pourront non seulement servir à compléter l'invention, mais aussi contribuer à sa définition, le cas échéant.

Au cours de ses recherches, la demanderesse s'est rendu compte de l'insatisfaction apporté par les dispositifs connus. Le GPS est devenu progressivement grand public dans des versions de faible précision. Le GPS différentiel nécessite des stations au sol et est trop onéreux dans le domaine considéré. Le guidage à modèle probabiliste par exemple à filtre de Bayes est très consommateur de ressources de calcul et demande des capteurs coûteux tels que des scanners laser de distance. Il met en œuvre des capteurs propres à l'engin considéré, par exemple des codeurs de roues, une centrale inertielle, etc., des capteurs de l'environnement et une cartographie. Certains systèmes requièrent des balises situées dans la zone d'évolution de l'engin. Ce n'est guère adapté à l'agriculture. La cartographie précise est évolutive avec le gel, la pluie, le vent, etc. mais aussi avec le type de culture.

Il existe des systèmes de guidage basés sur une infrastructure stationnaire de radars ou de caméras vidéo communicant avec l'engin mobile. Ni l'adaptation, ni les coûts ne sont envisageables pour l'agriculture et d'autres domaines à fortes contraintes.

Le Demandeur a identifié des particularités des applications agricoles et plus particulièrement maraîchères ou horticoles. La distance à parcourir entre deux retournements de la machine est relativement bien connue et une borne haute peut aisément être fixée. Les cultures sont implantées en lignes droites. Le guidage peut être conçu comme visant à se rapprocher le plus possible d'une ligne droite. Par ailleurs, le même système de guidage étant utilisé pour des travaux culturaux successifs d'une même culture, d'éventuels défauts inhérents au système de guidage seront répétés donc sans effet notable.

Il est proposé un système de guidage à suivi de faisceau laser plan. Un émetteur laser est positionné à une extrémité d'une parcelle agricole. L'émetteur laser émet un faisceau en une seule nappe plane. Le faisceau est en lumière visible ou non. S'agissant d'un laser, la longueur d'onde est connue avec précision. L'émetteur laser est de puissance compatible avec la présence humaine, actuellement inférieure ou égale à 5 mW. La divergence est inférieure ou égale à 0,4 mrad, préférablement inférieure à 1 mrad pour un bon fonctionnement dans des situations difficiles, dans le sens perpendiculaire au plan du faisceau. Le faisceau présente un angle d'ouverture compris entre 5° et 60°, préférablement entre 10 et 20°. De préférence, le plan du faisceau est vertical, indépendamment d'un dévers éventuel de la parcelle et/ou de la machine.

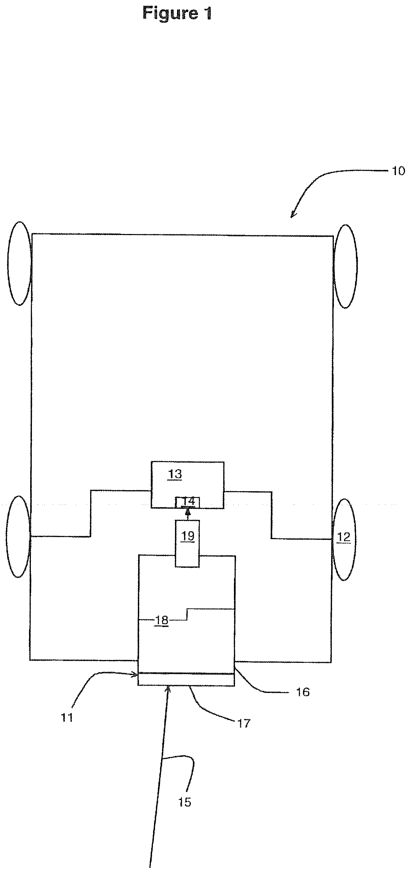

Comme illustré sur la figure 1, la machine 10 peut être un tracteur, un automoteur, une récolteuse, etc. La machine 10 comprend au moins un organe directeur 12, par exemple une roue directrice, et un mécanisme de direction 13. Le mécanisme de direction 13 est hydraulique ou électrique et commandé par un organe de commande 14 susceptible d'être connecté au système de guidage 11. L'organe de commande 14 peut être de type proportionnel avec éventuellement une faible composante dérivée et/ou intégrale.

La machine 10 est équipée du système de guidage 11. Le système de guidage 11 est prévu recevoir le faisceau laser incident 15. Le système de guidage 11 est supporté à une extrémité arrière de la machine 10 pour faciliter l'alignement initial lorsque l'utilisateur commence une nouvelle ligne. Le système de guidage 11 a une paroi d'extrémité libre pour recevoir directement le faisceau laser incident 15 représenté en trait fort. Le système de guidage 11 comprend un boîtier 16 opaque ouvert sur une extrémité, un filtre optique 17 monté à ladite extrémité ouverte, un écran 18 monté dans le boîtier 16, et une caméra 19 numérique montée dans la paroi du boîtier 16 opposée au filtre optique 17. La direction extrémité ouverte - extrémité opposée définit l'axe X du boîtier 16.

L'axe du boîtier 16 est parallèle à l'axe de propagation du faisceau laser incident. Le boîtier 16 est parallélépipédique. Le boîtier 16 peut servir de châssis à d'autres éléments du système de guidage 11. Le boîtier 16 est opaque au moins à la longueur d'onde du faisceau laser 15, de préférence opaque sur une large plage de longueurs d'onde. L'écran 18 est monté parallèlement au filtre optique 17. L'écran 18 est monté à distance du filtre optique 17 et à distance de la caméra 19. Dans un mode de réalisation, l'écran 18 est plan et monobloc.

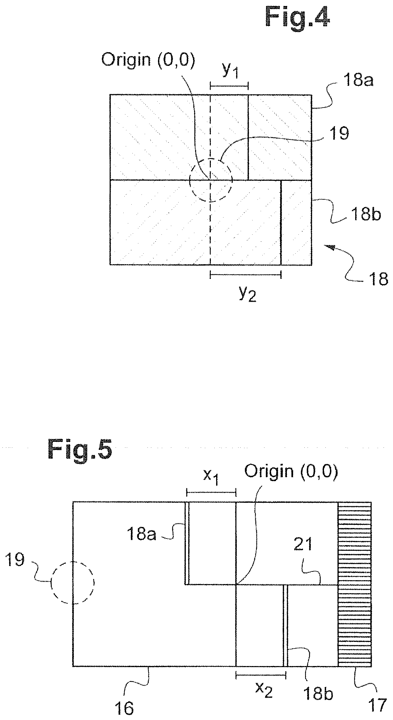

Dans le mode de réalisation représenté, l'écran 18 est bi plan, voir figures 4 et 5. L'écran 18 comprend deux parties planes 18a, 18b décalées l'une vers le filtre optique 17, l'autre vers la caméra 19. Le décalage est de $x_1$ dans un sens et de $x_2$ dans l'autre sens, selon l'axe X. On peut prévoir $x_1 = x_2$. Les deux parties planes 18a, 18b sont parallèles. Les deux parties planes 18a, 18b sont complémentaires. L'écran 18 est semi-opaque de manière à laisser passer la lumière, mais au même temps rendre visible l'intersection dudit écran et du faisceau laser. L'écran 18 est réalisé en acrylique ou plexiglas. Sur la figure 1, l'écran 18 a été représenté en deux parties décalées par dérogation à la vue de dessus générale.

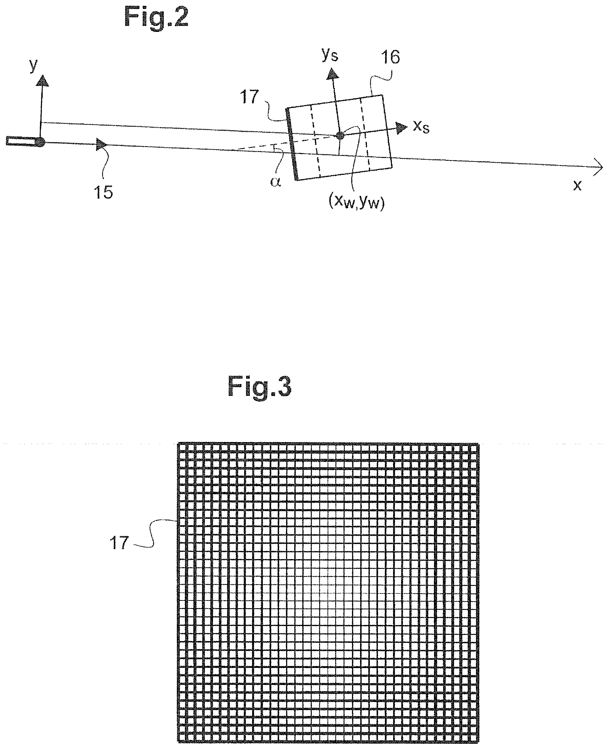

Le filtre optique 17, voir figure 3, est conçu pour laisser les composantes de lumière parallèles à l'axe du faisceau incident avec une ouverture choisie et éliminer les composantes orientées différemment. Le filtre optique 17 est spatial. Le filtre optique 17 est a-fréquentiel. Dans le mode de réalisation représenté, le filtre optique 17 comprend une structure en nid d'abeilles à alvéoles 20 débouchantes orientées parallèlement à l'axe. Les alvéoles 20 forment des canaux parallèles de transmission de lumière. Les alvéoles 20 peuvent être hexagonales ou rectangulaires. Dans le mode de réalisation représenté, les alvéoles 20 sont carrées pour une fabrication économique. Le mode de réalisation à alvéoles 20 rectangulaires est intéressant pour discriminer les écarts en site et en azimut. Le filtre optique 17 fournit en sortie une lumière directionnelle, de laquelle une grande partie des composantes de la lumière ambiante ont été éliminés.

Les alvéoles 20 sont carrées dans le mode représenté et disposées en lignes et colonnes. Sur la figure 3, le filtre optique 17 est vu de l'axe de la caméra, avec un angle d'incidence non nul hors du centre. Les alvéoles 20 de même taille apparaissent plus petites sur les bords en raison de l'incidence.

Les alvéoles 20 sont de largeur, de profondeur et de hauteur définissant l'ouverture angulaire choisie. L'ouverture peut être comprise entre 5° et 10°, préférablement entre 5° et 7°.

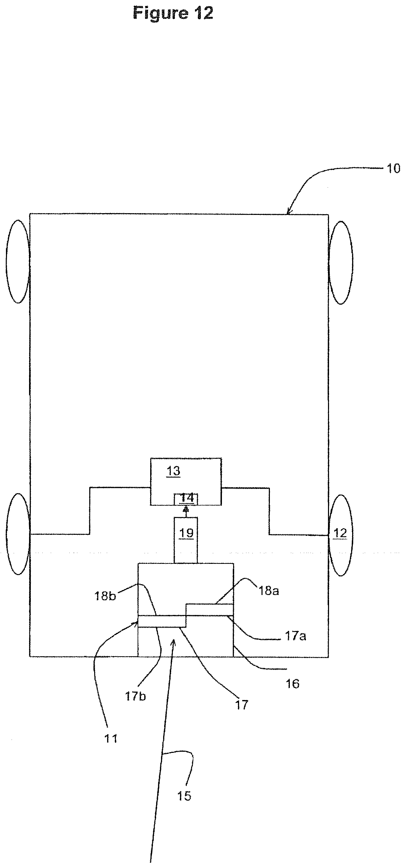

Dans un mode de réalisation préféré, la distance entre le filtre optique 17 et l'écran 18 est nulle, voir figure 12. L'écran 18 est adjacent au filtre optique 17. L'écran 18 peut être collé au filtre optique 17. On évite les effets d'une diffraction dans le filtre. A titre d'exemple, on dispose de deux demi-filtres 17a, 17b collés chacun à une partie 18a, 18b d'écran respective. Les demi-filtres sont aussi décalés, voir figure 12. Les deux demi-filtres 17a, 17b sont de dimensions correspondantes aux dimensions des parties 18a, 18b d'écran.

La structure en nid d'abeilles est réalisée en matériau synthétique moulé ou imprimé 3D. La structure en nid d'abeilles est de couleur noire. Les alvéoles 20 présentent une longueur comprise entre 5 et 60 mm. Les alvéoles 20 présentent une largeur comprise entre 2 et 15 mm. La structure en nid d'abeilles comprend des parois inter-alvéolaires d'épaisseur comprise entre 0,2 et 2 mm. Une disposition carrée facilite la fabrication avec une imprimante 3D. Comme représenté sur la figure 5, une cloison opaque 21 est disposée dans le boîtier 16 pour séparer les parties 18a, 18b d'écran 18. La cloison opaque 21 passe par l'axe du boîtier 16. La cloison opaque 21 s'étend du filtre optique 17 jusqu'à la partie d'écran la plus éloignée du filtre optique 17, ici la partie 18a.

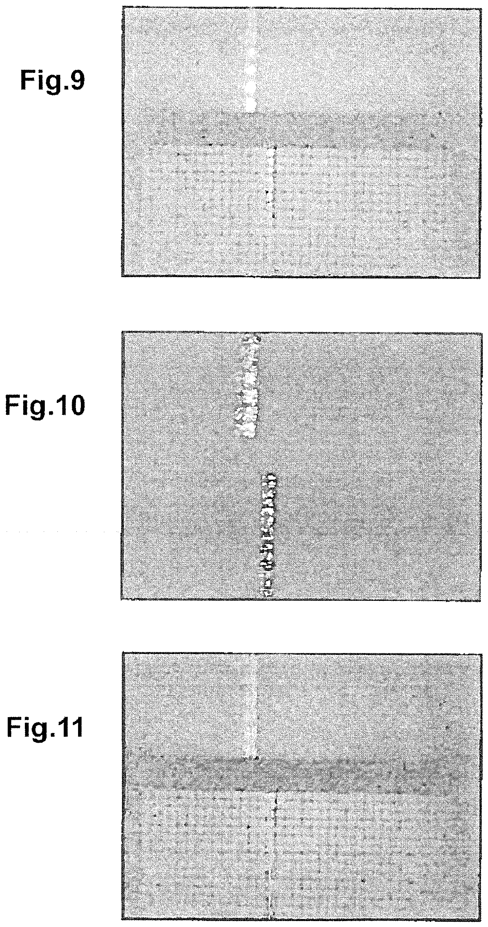

La caméra 19 est une caméra numérique résolue en pixels. La résolution expérimentée est de 480x640. Le résultat obtenu est satisfaisant. La résolution est comprise entre 100 000 et 600 000 pixels pour rester dans un fonctionnement optimal. La caméra 19 capte l'image affichée sur l'écran 18 provenant de la lumière pénétrant dans le boîtier 16 par le filtre optique 17. Ladite lumière filtrée comprend des composantes de lumière ambiante et du faisceau laser 15 incident pour autant que l'écart latéral et l'écart angulaire du boîtier 16 par rapport au faisceau laser 15 incident reste limité. Une image de sortie de la caméra 19 a été reproduite en figure 9. La structure du filtre y est visible. Une ligne décalée entre les parties haute et basse de l'écran y est observée. Cette ligne est sensiblement de la même couleur que le faisceau laser. La largeur de la ligne dépend de la distance au laser et de la divergence du faisceau. A partir d'une certaine distance par rapport à l'émetteur laser, l'épaisseur du faisceau en entrée du filtre optique peut être comparable puis même supérieur à la largeur d'une alvéole.

La limite d'écart latéral est sensiblement égale à la demi-largeur du filtre optique 17. La demi-largeur du filtre optique 17 peut correspondre à la demi-largeur du boîtier 16. La limite d'écart angulaire est sensiblement déterminée par le minimum du rapport largeur sur profondeur des alvéoles 20 et du rapport demi-largeur du filtre optique 17 sur distance filtre optique 17 - écran 18. En pratique, la limite d'écart angulaire est sensiblement déterminée par le rapport de forme des alvéoles 20. Sur les figures 1 et 2, le faisceau laser 15 a été représenté avec un décalage latéral et angulaire.

La distance entre la caméra 19 et l'écran 18, notamment la partie d'écran 18 la plus proche de la caméra 19 est choisie en fonction du champ de la caméra 19, notamment. La lumière filtrée spatialement illuminant l'écran 18 est centrée sur l'axe du boîtier 16. La caméra 19 fournit en sortie une image numérique, en général sur trois canaux de couleurs rouge-vert-bleu RVB ou RGB en langue anglaise. La fréquence de prise d'images est comprise entre 10 Hz et 30 Hz.

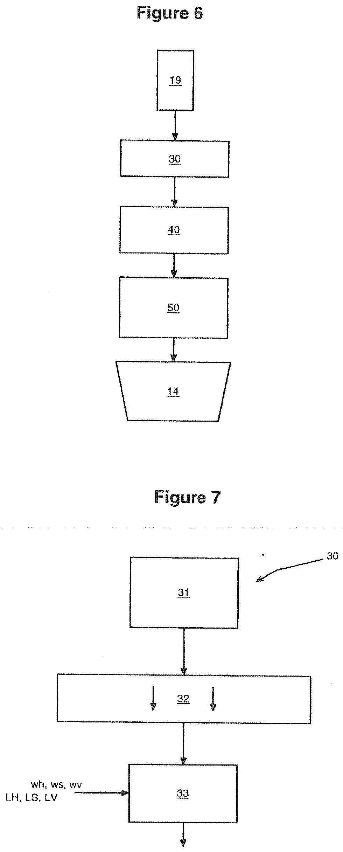

Le système de guidage 11, voir figure 6, comprend un organe de prétraitement 30 générant une image de réponse de détection, un détecteur de lignes 40 générant une estimation J des coordonnées des lignes détectées et un localisateur 50 calculant une distance $y_w$ du système de guidage 11 par rapport au faisceau laser 15 plan. La distance $y_w$ est envoyée en sortie pour commander le mécanisme de direction 13 afin de minimiser ladite distance $y_w$. Une distance $y_w$ nulle signifie que le système de guidage 11 est centré sur le faisceau laser 15.

Avantageusement, le localisateur 50 calcule un écart angulaire $\alpha$ du système de guidage 11 par rapport au faisceau laser 15 plan. L'écart angulaire $\alpha$ est envoyé en sortie pour commander le mécanisme de direction 13 afin de minimiser ledit écart angulaire $\alpha$. Un écart angulaire $\alpha$ nul signifie que le système de guidage 11 est aligné sur le faisceau laser 15. Le calcul de l'écart angulaire $\alpha$ est effectué à partir de données différentielles.

L'organe de prétraitement 30 procède à l'élimination de composantes de l'image de provenance autre que le faisceau laser 15 incident. L'organe de prétraitement 30 comprend un convertisseur 31 de couleurs primaires rouge-vert-bleu en Teinte Saturation Valeur (TSV ou HSV en anglais) convertissant chaque pixel de l'image de sortie de la caméra 19 en un pixel d'une image TSV. Le convertisseur 31 peut être un composant du commerce. La teinte est codée sur un cercle de couleur. La saturation est l'intensité de la couleur. La valeur est la brillance de la couleur, 0 étant noir. Le convertisseur 31 recevant une image composée de pixels RVB fournit en sortie une image composée de pixels TSV.

L'organe de prétraitement 30 comprend un égalisateur 32 à histogramme d'égalisation pour chacun des canaux de saturation et de valeur de l'image TSV. L'histogramme est appliqué indépendamment pour le canal de saturation et le canal de valeur :

$$T(x_k) = \frac{(L-1)}{n} \sum_{j=0}^{k} n_j$$

Avec $T(x_k)$ la valeur de sortie des pixels de niveau $x_k$, L le nombre de niveaux du canal considéré, n le nombre de pixels de l'image, $n_j$ le nombre d'occurrence de pixels de niveau $x_j$.

Le but d'appliquer une égalisation d'histogramme est de maximiser le contraste entre les différentes valeurs, ce qui rend plus facile la classification dans les étapes ultérieures. Vu qu'on l'applique individuellement par canal, l'histogramme n'est pas le même d'un canal à l'autre. L'égalisation des trois canaux peut être effectuée simultanément. L'égalisation dans la teinte peu introduire des distorsions au niveau de la couleur. En pratique, l'amélioration dans le contraste est plus importante que cette distorsion, d'après les expériences du Demandeur. L'égalisateur a la même sortie pour toutes les valeurs de $x_k$ lorsque le nombre d'occurrences est le même pour toutes les niveaux du canal.

Ledit égalisateur 32 reçoit l'image TSV et fournit en sortie une image TSV égalisée offrant un contraste amélioré.

L'organe de prétraitement 30, cf figure 7, comprend un calculateur 33 de fonction exponentielle de la distance Euclidienne pondérée entre un pixel TSV égalisé et un pixel de référence. Le pixel de référence peut être un pixel théorique correspondant à une zone de l'écran 18 qui serait entièrement illuminée par le faisceau laser 15 incident. Ledit calculateur 33 reçoit l'image TSV égalisée provenant de l'égalisateur 32. Ledit calculateur 33 met en œuvre une fonction exponentielle négative de la somme par canal des carrés de la différence entre le pixel de l'image TSV égalisée ou pixel TSV égalisé et le pixel de référence :

$$O_{i,j} = e^{-(w_H(I^H_{i,j}-L^H)^2 + w_S(I^S_{i,j}-L^S)^2 + w_V(I^V_{i,j}-L^V)^2)}$$

avec $O_{i,j}$ la valeur du pixel de coordonnées i et j de l'image mono canal de sortie de prétraitement ; $w_H$, $w_S$, $w_V$ les pondérations pour les canaux H, S, V ; $I^H_{i,j}$, $I^S_{i,j}$, $I^V_{i,j}$ la valeur du pixel d'entrée dans chaque canal ; $L^H$, $L^S$, $L^V$ la valeur du pixel de référence dans chaque canal. Le pixel de référence est commun à toute l'image. Les pondérations $w_H$, $w_S$, $w_V$ des canaux H, S, V. sont choisies à partir d'échantillons dans lesquels le laser à été projeté dans l'appareil dans des conditions réalistes et diverses, pour essayer de couvrir un grand nombre de situations d'utilisation. Les valeurs des poids sont supérieures à 0 et, la lumière ambiante étant beaucoup plus saturée que le laser, la saturation est une information pertinente pour détecter le laser.

L'image de sortie de l'organe de prétraitement 30 est une image de réponse de détection O, représentée en figure 10. Etant mono-canal, l'image de réponse de détection O est en noir et blanc. Une raie blanche de fort contraste y est observée. Vu que la machine doit opérer dans des conditions extrêmes d'éclairage, la fonction de réponse a été étalonnée pour être très sensible, ce qui dans l'exemple donne comme résultat un réponse forte dans des pixels qui sont éclairés même assez faiblement par le laser.

L'image de réponse de détection O est une synthèse des trois canaux HSV. L'image de réponse de détection O est mono canal. Chaque pixel de ladite image de réponse de détection présente une valeur fonction de la probabilité que ledit pixel appartienne ou non à la ligne du faisceau laser 15.

En d'autres termes, le convertisseur 31 permet de disposer d'un format d'image plus adapté aux traitements postérieurs. L'égalisateur 32 améliore le contraste. Le calculateur 33 permet d'attribuer à chaque pixel $O_{i,j}$ une valeur de 1 si le pixel TSV égalisé $I_{i,j}$ est identique au pixel de référence et présente donc la même teinte, la même saturation et la même valeur qu'un pixel idéal illuminé par le faisceau laser 15 incident, et une valeur très faible, $O_{i,j} = e^{-(w_H(L^H)^2 + w_S(L^S)^2 + w_V(L^V)^2)}$, si le pixel TSV égalisé $I_{i,j}$ est noir. Ainsi la sortie du convertisseur 31 formant sortie de l'organe de prétraitement 30 fournit une image de réponse de détection représentative des zones illuminées par le faisceau laser 15 incident. Ont été sélectionnés par le prétraitement les pixels correspondant au faisceau laser 15 plan incident reçu par le système de guidage 11, filtré et projeté sur ledit écran 18.

Le détecteur de lignes 40 reçoit en entrée l'image de réponse de détection O comprenant les pixels $O_{i,j}$. La valeur du pixel $O_{i,j}$ est proportionnelle à la probabilité que ledit pixel $O_{i,j}$ appartienne à la ligne lumineuse projetée par le faisceau laser 15 incident sur l'écran 18. Le détecteur de lignes 40 génère à partir de l'image de réponse de détection O par un traitement sur les colonnes de pixels une estimation J des coordonnées (en numéro de colonne) des lignes détectées.

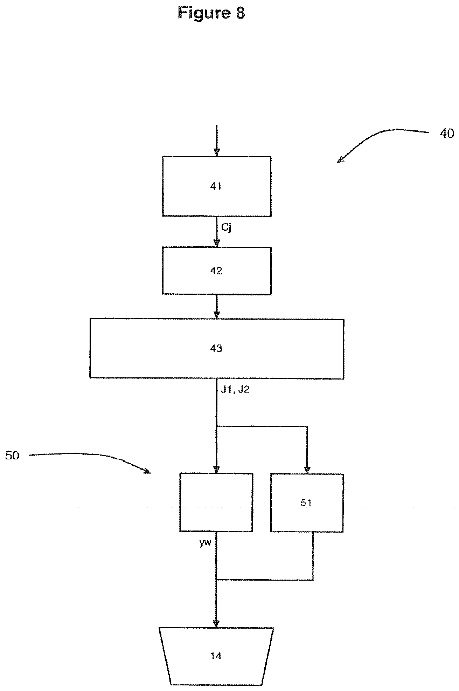

Le détecteur de lignes 40, voir figure 8, comprend un sommateur 41 de colonnes effectuant l'addition des pixels de chaque colonne de ladite image de réponse de détection pour obtenir un paramètre de colonne $C_j = \sum_i O_{i,j}$. Le paramètre de colonne est représentatif du taux de présence de la ligne lumineuse projetée par le faisceau laser 15 incident sur l'écran 18 dans la colonne j.

Le détecteur de lignes 40 comprend un filtre passe-haut 42 recevant les paramètres de colonne $C_j$. Le filtre passe-haut 42 élimine les colonnes dont le paramètre Cj est trop bas. Le filtre passe-haut 42 calcule le maximum $C_{max}$ desdits paramètres $C_j$ de colonne : $C_{max} = max(C_j)$. Le filtre passe-haut 42 applique un coefficient de filtrage $\tau$ choisi. Le coefficient de filtrage $\tau$ est constant. Le filtre passe-haut 42 calcule le produit $\tau C_{max}$ du maximum $C_{max}$ par le coefficient de filtrage $\tau$. Le filtre passe-haut 42 élimine les colonnes dont le paramètre $C_j$ est inférieur au produit $\tau C_{max}$. Ainsi les colonnes de faible valeur présentant une faible probabilité de correspondre à une zone de l'écran 18 illuminée par le faisceau laser 15 incident sont éliminées. Les colonnes pertinentes au sens de la recherche de la position du faisceau laser 15 incident sur l'écran 18 sont sélectionnées.

Le filtrage est appliqué sur le résultat de la classification. En variante, le filtrage est effectué en même temps que la classification. Le paramètre de filtrage est constant.

La description ci-dessus du détecteur de lignes 40 fait une simplification en supposant que les lignes détectées provenant du faisceau laser 15 incident sont verticales. Si l'on veut tenir compte d'une inclinaison relative du plan du faisceau laser 15 et du plan des colonnes de pixels, on peut ajouter un estimateur d'inclinaison, par exemple basé sur la méthode des moindres carrés.

Le détecteur de lignes 40 comprend un pondérateur 43 de colonnes. Le pondérateur 43 reçoit les colonnes sélectionnées par le filtre passe-haut 42 affectées de leur indice j d'origine. L'index j de colonne est conservé. Ceci revient à admettre une discontinuité dans l'ensemble des index des colonnes sélectionnées. La connaissance de la position de chaque colonne sélectionnée, dans l'image TSV est préservée. La connaissance de la colonne est traduite en une coordonnée d'intersection entre le laser et l'écran.

Le pondérateur 43 somme les paramètres Cj des colonnes pertinentes pondérés par leur index j dans l'image de sortie de la caméra 19, soit $\sum_j jC_j$. Le pondérateur 43 somme les paramètres $C_j$ des colonnes pertinentes soit $\sum_j C_j$. Le pondérateur 43 effectue le rapport de la somme des paramètres pondérés par leur index j dans l'image de sortie de la caméra 19 et de la somme des paramètres. Le pondérateur 43 fournit en sortie la valeur J d'index de colonne estimative des coordonnées du faisceau laser 15 plan incident dans l'image de sortie de la caméra 19: $J = \sum_j jC_j / \sum_j C_j$. Le détecteur de lignes 40 fournit à partie de l'image de réponse de détection une estimation des coordonnées du faisceau laser 15 plan incident dans l'image de sortie de la caméra 19. J est compris entre 1 et le nombre de colonnes de l'image de sortie de la caméra 19.

Le localisateur 50 reçoit ladite estimation J pour calculer la distance $y_w$. L'estimation J est proportionnelle à la distance $y_w$. Dans le mode de réalisation à écran 18 plan, le localisateur 50 calcule la distance $y_w$ par interpolation linéaire $y_w = m\, J + b$. Le paramètre m est la distance entre l'écran 18 et le filtre optique 17. Le paramètre b est représentatif du centrage de l'écran 18. Les paramètres m et b sont des constantes pour une machine donnée. Les paramètres m et b peuvent être des paramètres d'étalonnage différents d'un système de guidage à l'autre ou d'une série de systèmes de guidage à l'autre.

Dans le mode de réalisation à écran 18 en deux parties 18a, 18b parallèles, les deux parties 18a, 18b sont respectivement haute et basse. Le localisateur 50 calcule la distance $y_w$ par interpolation linéaire à partir de chaque partie 18a, 18b d'écran 18. Dans ce qui précède, un dédoublement est fait pour disposer d'une estimation $J_1$ relative à la partie 18a et d'une estimation $J_2$ relative à la partie 18b. Les paramètres $m_1$ de distance entre la partie 18a de l'écran 18 et le filtre optique 17, $b_1$ de centrage de la partie 18a de l'écran 18, $m_2$ de distance entre la partie 18b de l'écran 18 et le filtre optique 17, et $b_2$ de centrage de la partie 18b de l'écran 18 sont connus de par la structure du système de guidage 11. En général, on a $b_1 = b_2$.

Le localisateur 50 effectue les interpolations $y_1 = m_1 J_1 + b_1$ et $y_2 = m_2 J_2 + b_2$. $y_1$ et $y_2$ sont les distances du système de guidage 11 par rapport au faisceau laser 15 plan dans la partie 18a et la partie 18b de l'écran 18. Le localisateur 50 effectue la moyenne $y_w = (y_1 + y_2)/2$. La distance $y_w$ est un écart dans un plan horizontal entre le centre du système de guidage 11 et le faisceau laser 15 plan.

Sur la figure 11, sont représentés en superposition, l'image de la figure 9 et deux demi lignes verticales de coordonnées $y_1$ et $y_2$. Les coordonnées $y_1$ et $y_2$ correspondent avec précision aux positions faisceau laser illuminant les deux parties d'écran.

Dans le mode de réalisation à écran 18 en deux parties 18a, 18b parallèles, le localisateur 50 comprend un calculateur 51 de l'angle $\alpha$ entre le plan du faisceau laser 15 et l'axe du système de guidage 11 avec $\alpha = Atan2(y_2 - y_1\ ; x_1 + x_2)$, ledit axe étant normal à chaque partie de l'écran 18. La somme $x_1 + x_2$ est la distance entre les deux parties 18a, 18b de l'écran 18, voir figure 5. La différence $y_2 - y_1$ est la distance entre le faisceau laser 15 plan dans la partie 1 de l'écran 18 et le faisceau laser 15 plan dans la partie 2 de l'écran 18, voir figure 4. L'angle $\alpha$ est l'écart angulaire de l'axe du système de guidage 11 par rapport au faisceau laser 15 dans un plan horizontal, voir figure 2. La connaissance de l'angle $\alpha$ permet une correction plus efficace. L'hypothèse est que l'axe vertical du capteur et celui du laser sont alignés. Dans la pratique il y aura des différences et l'angle obtenu est une approximation de l'angle réel.

A titre d'exemple, un angle $\alpha$ élevé et une distance $y_w$ nulle signifient que la machine est centrée sur le faisceau laser de guidage mais désalignée. Dans le mode à écran plan, aucune correction n'est engagée car la distance $y_w$ nulle est satisfaisante sauf à des réglages adaptés des modes proportionnel et dérivé de la correction. La dérivée $y'_w$ peut donner une information pertinente mais moins précise que l'angle $\alpha$. Dans le mode à écrans partiels décalés, l'angle $\alpha$ élevé permet de mettre en œuvre une correction immédiatement, par exemple dès le début d'un rang de culture lorsque la machine vient de croiser le faisceau laser de guidage et que le système de guidage envoie les informations de sortie indicatrices de centrage et de désalignement.

L'invention propose aussi un ensemble de guidage comprenant le système de guidage 11 décrit ci avant et au moins un émetteur laser approprié.

## Revendications

1. Machine (10) à guidage autonome, comprenant au moins un organe directeur, un mécanisme de direction (13) et un système de guidage (11) comprenant un écran (18) et une caméra (19) numérique de prise d'images résolues en pixels dudit écran (18), **caractérisée en ce que** le système de guidage (11) comprend un filtre optique (17) muni d'une face de réception exposée à l'extérieur et capable de transmettre les rayons lumineux dirigés sensiblement selon une direction et d'éliminer les autres rayons lumineux, l'écran (18) recevant la lumière filtrée, un organe de prétraitement (30) capable de sélectionner les pixels correspondant à un faisceau laser plan incident reçu par le système de guidage (11), filtré et projeté sur ledit écran (18), et de générer une image de réponse de détection, un détecteur de lignes (40) générant à partir de l'image de réponse de détection par un traitement sur les colonnes de pixels une estimation . (J) des coordonnées des lignes détectées et un localisateur (50) recevant l'estimation des coordonnées des lignes détectées et calculant des valeurs représentatives de colonnes de pixels à partir de ladite estimation des coordonnées des lignes détectées et de paramètres du système de guidage (11), puis calculant une distance ($y_w$) du système de guidage (11) par rapport au faisceau laser plan pour commander le mécanisme de direction (13) afin de minimiser ladite distance ($y_w$).

2. Machine (10) selon la revendication 1, dans laquelle le filtre optique (17) comprend une structure en nid d'abeille à alvéoles (20) traversantes pour transmettre les rayons lumineux dirigés selon l'axe des alvéoles (20) traversantes.

3. Machine (10) selon l'une des revendications précédentes, dans laquelle l'image de réponse de détection est mono canal et chaque pixel de ladite image de réponse de détection présente une valeur fonction de la probabilité que ledit pixel appartienne ou non à la ligne du faisceau laser.

4. Machine (10) selon l'une des revendications précédentes, dans laquelle l'organe de prétraitement (30) comprend un convertisseur (31) de couleurs primaires rouge-vert-bleu en Teinte Saturation Valeur (TSV) convertissant chaque pixel de l'image de sortie de la caméra (19) en un pixel d'une image TSV, un égalisateur (32) pour chacun des canaux de saturation et de valeur de l'image TSV, et un calculateur (33) de fonction exponentielle de la distance Euclidienne pondérée entre un pixel TSV et un pixel de référence :

$$O_{i,j} = e\text{-}(w_H(I^H_{i,j}\text{-}L^H)^2 + w_S(I^S_{i,j}\text{-}L^S)^2 + w_V(I^V_{i,j}\text{-}L^V)^2)$$

Avec $O_{i,j}$ la valeur du pixel de coordonnées i et j de l'image mono canal de sortie de prétraitement ; $w_H$, $w_S$, $w_V$ les pondérations pour les canaux H, S, V ; $I^H_{i,j}$, $I^S_{i,j}$, $I^V_{i,j}$ la valeur du pixel d'entrée dans chaque canal ; $L^H$, $L^S$, $L^V$ la valeur du pixel de référence dans chaque canal.

5. Machine (10) selon l'une des revendications précédentes, dans laquelle le localisateur (50) comprend un calculateur de la distance ($y_W$) du système de guidage (11) par rapport au faisceau laser plan en fonction de l'estimation (J) des coordonnées des lignes détectées, d'un paramètre m de distance entre l'écran (18) et le filtre optique (17) et d'un paramètre b de centrage de l'écran (18) avec $y_w = m\,J+b$.

6. Machine (10) selon l'une des revendications précédentes, dans laquelle l'écran (18) est adjacent au filtre optique (17).

7. Machine (10) selon l'une des revendications précédentes, dans laquelle l'écran (18) comprend deux parties (18a, 18b) parallèles, échelonnées selon la direction de propagation du faisceau laser incident de manière que le localisateur (50) calcule un écart angulaire ($\alpha$) du système de guidage (11) par rapport au faisceau laser plan pour commander le mécanisme de direction (13).

8. Machine (10) selon la revendication 7, dans laquelle le localisateur (50) après le calcul des valeurs représentatives de colonnes de pixels, calcule l'écart angulaire ($\alpha$) du système de guidage (11) par rapport au faisceau laser plan pour commander le mécanisme de direction (13) afin de minimiser ladite distance ($y_w$)

9. Machine (10) selon la revendication 8, dans laquelle le localisateur (50) comprend un calculateur de l'angle ($\alpha$) entre le plan du faisceau laser et l'axe du système de guidage (11) avec $\alpha = \text{Atan2}(y_2 - y_t : x_1 + x_2)$, ledit axe étant normal à chaque partie de l'écran (18), avec $y_1 = m_1 J_1 + b_1$, $J_1$ une estimation des coordonnées des lignes détectées sur la première partie de l'écran, un paramètre $m_1$ de distance entre la première partie de l'écran et le filtre optique et un paramètre $b_1$ de centrage de la première partie de l'écran, et $y_2 = m_2 J_2 + b_2$, $J_2$ une estimation des coordonnées des lignes détectées sur la deuxième partie de l'écran, un paramètre $m_2$ de distance entre la deuxième partie de l'écran et le filtre optique et un paramètre $b_2$ de centrage de la deuxième partie de l'écran, la distance ($y_w$) étant la moyenne des distances $y_1$ et $y_2$, les parties (18a, 18b) étant décalées l'une vers le filtre optique (17), l'autre vers la caméra (19), le décalage étant de $x_1$ dans un sens et de $x_2$ dans l'autre sens, selon l'axe.

10. Ensemble de guidage de machine (10) comprenant un système de guidage (11) mobile et un émetteur stationnaire de faisceau laser (15) plan, le système de guidage (11) comprenant un filtre optique (17) muni d'une face de réception exposée à l'extérieur et capable de transmettre les rayons lumineux dirigés sensiblement selon une direction et d'éliminer les autres rayons lumineux, un écran (18) recevant la lumière filtrée, une caméra (19) numérique de prise d'images résolues en pixels dudit écran (18), un organe de prétraitement (30) capable de sélectionner les pixels correspondant à un faisceau laser plan incident reçu par le système de guidage (11), filtré et projeté sur ledit écran (18), et de générer une image de réponse de détection, un détecteur de lignes (40) générant à partir de l'image de réponse de détection par un traitement sur les colonnes de pixels une estimation . (J) des coordonnées des lignes détectées et un localisateur (50) recevant l'estimation des coordonnées des lignes détectées et calculant des valeurs représentatives de colonnes de pixels à partir de ladite estimation des coordonnées des lignes détectées et de paramètres du système de guidage (11), puis calculant une distance ($y_w$) du système de guidage (11) par rapport au faisceau laser plan pour générer une commande minimisant ladite distance; ($y_w$).

## Patentansprüche

1. Autonom geführte Maschine (10), mindestens ein Lenkorgan, einen Lenkungsmechanismus (13) und ein Führungssystem (11) umfassend, das einen Bildschirm (18) und eine digitale Kamera (19) zur Aufnahme von in Pixeln aufgelösten Bildern des Bildschirms (18) umfasst,
   **dadurch gekennzeichnet, dass** das Führungssystem (11) ein optisches Filter (17) umfasst, das mit einer Empfangsseite versehen ist, die zur Außenseite hin ausgesetzt ist, und imstande ist, die im Wesentlichen in eine Richtung geleiteten Lichtstrahlen zu übertragen und die anderen Lichtstrahlen zu eliminieren, wobei der Bildschirm (18) das gefilterte Licht empfängt, ein Vorverarbeitungsorgan (30), das imstande ist, die Pixel auszuwählen, die einem durch das Führungssystem (11) empfangenen, einfallenden planaren Laserstrahl entsprechen, der gefiltert, und auf den Bildschirm (18) projiziert wird, und ein Detektionsreaktionsbild zu generieren, einen Zeilendetektor (40), der aus dem Detektionsreaktionsbild durch eine Verarbeitung an den Pixelspalten eine Schätzung (J) der Koordinaten der detektierten Zeilen generiert, und einen Lokalisierer (50), der die Schätzung der Koordinaten der detektierten Zeilen empfängt und repräsentative Werte von Pixelspalten aus der Schätzung der Koordinaten der detektierten Zeilen und aus Parametern des Führungssystems (11) berechnet, und danach eine Distanz ($y_w$) des Führungssystems (11) in Bezug auf den planaren Laserstrahl berechnet, um den Lenkungsmechanismus (13) anzusteuern, um die Distanz ($y_w$) zu minimieren.

2. Maschine (10) nach Anspruch 1, wobei das optische Filter (17) eine Wabenstruktur mit durchgehenden Zellen (20) umfasst, um die geleiteten Lichstrahlen entlang der Achse der durchgehenden Zellen (20) zu übertragen.

3. Maschine (10) nach einem der vorstehenden Ansprüche, wobei das Detektionsreaktionsbild einkanalig ist und jedes Pixel des Detektionsreaktionsbildes einen Wert aufweist, der von der Wahrscheinlichkeit abhängig ist, dass das Pixel der Zeile des Laserstrahls angehört oder nicht.

4. Maschine (10) nach einem der vorstehenden Ansprüche, wobei das Vorverarbeitungsorgan (30) einen Rot-Grün-Blau Grundfarben-Wandler (31) in Farbton Sättigung Wert (TSV) umfasst, der jedes Pixel des Ausgangsbildes der Kamera (19) in ein Pixel eines TSV-Bildes umwandelt, einen Entzerrer (32) für jeden der Sättigungs- und Wertkanäle des TSV-Bildes, und einen Exponentialfunktionsrechner (33) der gewichteten euklidischen Distanz zwischen einem TSV-Pixel und einem Referenzpixel:

$$O_{i,j} = e - (w_H(I^H_{i,j} - L^H)^2 + w_S(I^S_{i,j} - L^S)^2 + w_V(I^V_{i,j} - L^V)^2)$$

wobei $O_{i,j}$ der Wert des Pixels der Koordinaten i und j des einkanaligen Bildes am Vorverarbeitungsausgang ist; $w_H$, $w_S$, $w_V$ die Gewichtungen für die Kanäle H, S, V sind; $I^H_{i,j}$, $I^S_{i,j}$, $I^V_{i,j}$ der Wert des Eingangspixels in jedem Kanal ist; $L^H$, $L^S$, $L^V$ der Wert des Referenzpixels in jedem Kanal ist.

5. Maschine (10) nach einem der vorstehenden Ansprüche, wobei der Lokalisierer (50) einen Rechner der Distanz ($y_w$) des Führungssystems (11) in Bezug auf den planaren Laserstrahl in Abhängigkeit von der Schätzung (J) der Koordinaten der detektierten Zeilen, eines Parameters m der Distanz zwischen dem Bildschirm (18) und dem optischen Filter (17) und eines Zentrierparameters b des Bildschirms (18) umfasst, mit $y_w$ = M J+b.

6. Maschine (10) nach einem der vorstehenden Ansprüche, wobei der Bildschirm (18) an das optische Filter (17) angrenzend ist.

7. Maschine (10) nach einem der vorstehenden Ansprüche, wobei der Bildschirm (18) zwei parallele Teile (18a, 18b) umfasst, die entlang der Ausbreitungsrichtung des einfallenden Laserstrahls gestaffelt sind, sodass der Lokalisierer (50) eine Winkelabweichung ($\alpha$) des Führungssystems (11) in Bezug auf den planaren Laserstrahl berechnet, um den Lenkungsmechanismus (13) anzusteuern.

8. Maschine (10) nach Anspruch 7, wobei der Lokalisierer (50) nach der Berechnung der repräsentativen Werte von Pixelspalten die Winkelabweichung ($\alpha$) des Führungssystems (11) in Bezug auf den planaren Laserstrahl berechnet, um den Lenkungsmechanismus (13) anzusteuern, um die Distanz ($y_w$) zu minimieren.

9. Maschine (10) nach Anspruch 8, wobei der Lokalisierer (50) einen Rechner des Winkels ($\alpha$) zwischen der Ebene des Laserstrahls und der Achse des Führungssystems (11) umfasst, mit $\alpha$ = Atan2 ($y_2$-$y_1$; $x_1$+$x_2$), wobei die Achse zu jedem Teil des Bildschirms (18) normal ist, mit $y_1$ = $m_1$ $J_1$+$b_1$, wobei $J_1$ eine Schätzung der Koordinaten der detektierten Zeilen im ersten Teil des Bildschirms ist, eines Distanzparameters $m_1$ zwischen dem ersten Teil des Bildschirms und dem optischen Filter und eines Zentrierparameters $b_1$ des ersten Teils des Bildschirms, und $y_2$ = $m_2$ $J_2$+$b_2$, wobei $J_2$ eine Schätzung der Koordinaten der detektierten Zeilen im zweiten Teil des Bildschirms, eines Distanzparameters $m_2$ zwischen dem zweiten Teil des Bildschirms und dem optischen Filter und eines Zentrierparameters $b_2$ des zweiten Teils des Bildschirms, wobei die Distanz ($y_w$) der Mittelwert der Distanzen $y_1$ und $y_2$ ist, die Teile (18a, 18b) einerseits zum optischen Filter (17) und andererseits zur Kamera (19) abweichend sind, wobei die Abweichung in einer Richtung $x_1$ und in der anderen Richtung $x_2$ entlang der Achse ist.

10. Einheit zum Führen einer Maschine (10), ein mobiles Führungssystem (11) und einen stationären Sender eines planaren Laserstrahls (15) umfassend, wobei das Führungssystem (11) ein optisches Filter (17) umfasst, das mit einer Empfangsseite versehen ist, die zur Außenseite hin ausgesetzt ist, und imstande ist, die im Wesentlichen in eine Richtung geleiteten Lichtstrahlen zu übertragen und die anderen Lichtstrahlen zu eliminieren, einen Bildschirm (18), der das gefilterte Licht empfängt, eine digitale Kamera (19) zur Aufnahme von in Pixeln aufgelösten Bildern des Bildschirms (18), ein Vorverarbeitungsorgan (30), das imstande ist, die Pixel auszuwählen, die einem durch das Führungssystem (11) empfangenen, einfallenden planaren Laserstrahl entsprechen, der gefiltert, und auf den Bildschirm (18) projiziert wird, und ein Detektionsreaktionsbild zu generieren, einen Zeilendetektor (40), der aus dem Detektionsreaktionsbild durch eine Verarbeitung an den Pixelspalten eine Schätzung (J) der Koordinaten der detektierten Zeilen generiert, und einen Lokalisierer (50), der die Schätzung der Koordinaten der detektierten Zeilen empfängt und repräsentative Werte von Pixelspalten aus der Schätzung der Koordinaten der detektierten Zeilen und aus Parametern des Führungssystems (11) berechnet, und danach eine Distanz ($y_w$) des Führungssystems (11) in Bezug auf den planaren Laserstrahl berechnet, um eine Ansteuerung zu generieren, die die Distanz ($y_w$) minimiert.

**Claims**

1. An autonomously guided machine (10) which comprises at least a steering member and a steering mechanism (13) and a guidance system (11) comprising a screen (18) and a digital camera (19) for capturing images resolved into pixels of said screen (18), **characterized in that** the guidance system (11) comprises an optical filter (17) which has a receiving face exposed to the exterior and which can transmit light rays directed substantially in one direction and eliminate other light rays; the screen (18) receiving the filtered light; a pre-processing member (30) that can select the pixels corresponding to an incident plane laser beam received by the guidance system (11), filtered and projected onto said screen (18), and can generate a detection response image; a line detector (40) generating, on the basis of the detection response image, by processing on the columns of pixels, an estimate (J) of the coordinates of the detected lines; and a locator (50) that receives the estimate of the coordinates of the detected lines and calculates values representative of columns of pixels on the basis of said estimate of the coordinates of the detected lines and parameters of the guidance system (11), and then calculates a distance ($y_w$) of the guidance system (11) from the plane laser beam in order to control the steering mechanism (13) so as to minimize said distance ($y_w$).

2. The machine (10) according to claim 1, wherein the optical filter (17) comprises a honeycomb structure with through cells (20), for transmitting the light rays along the axis of the through cells (20).

3. The machine (10) according to any of the preceding claims, wherein the detection response image is single-channel, and each pixel of said detection response image has a value which is a function of the probability that said pixel does or does not belong to the line of the laser beam.

4. The machine (10) according to any of the preceding claims, wherein the pre-processing member (30) comprises a red-green-blue primary colors to hue-saturation-value (HSV) converter (31), which converts each pixel of the output image of the camera (19) into a pixel of an HSV image, an equalizer (32) for each of the saturation and value channels of the HSV image, and a calculator (33) of an exponential function of the weighted Euclidian distance between an HSV pixel and a reference pixel:

$$O_{i,j} = e\text{-}(w_H(I^H_{i,j}\text{-}L^H)^2 + w_S(I^S_{i,j}\text{-}L^S)^2 + w_V(I^V_{i,j}\text{-}L^V)^2)$$

where $O_{i,j}$ is the value of the pixel having coordinates i and j of the single-channel image forming the pre-processing output; $w_H$, $w_S$, $w_V$ are the weightings for the channels H, S, V; $I^H_{i,j}$, $I^S_{i,j}$, $I^V_{i,j}$ is the value of the input pixel in each channel; and $L^H$, $L^S$, $L^V$ is the value of the reference pixel in each canal.

5. The machine (10) according to any of the preceding claims, wherein the locator (50) comprises a calculator of the distance ($y_w$) of the guidance system (11) from the plane laser beam as a function of the estimate (J) of the coordinates of the detected lines, of a parameter m of distance between the screen (18) and the optical filter (17), and of a parameter b of centering of the screen (18), where $y_w$ = m J+b.

6. The machine (10) according to any of the preceding claims, wherein the screen (18) is adjacent to the optical filter (17).

7. The machine (10) according to any of the preceding claims, wherein the screen (18) comprises two parallel parts (18a, 18b), spaced apart in the direction of propagation of the incident laser beam, so that the locator (50) calculates an angular deviation ($\alpha$) of the guidance system (11) from the plane laser beam in order to control the steering mechanism (13).

8. The machine (10) according to claim 7, wherein the locator (50), after the calculation of the values representative of columns of pixels, calculates the angular deviation ($\alpha$) of the guidance system (11) from the plane laser beam in order to control the steering mechanism (13) so as to minimize said distance ($y_w$).

9. The machine (10) according to claim 8, wherein the locator (50) comprises a calculator of the angle ($\alpha$) between the plane of the laser beam and the axis of the guidance system (11), where $\alpha$ = Atan2($y_2$-$y_1$;$x_1$+$x_2$), said axis being normal to each part of the screen (18), where $y_1$ = $m_1$ $J_1$+$b_1$, $J_1$ an estimate of the coordinates of the detected lines on the first part of the screen, $m_1$ a parameter of distance between the first part of the screen and the optical filter, and $b_1$ a parameter of the centering of the first part of the screen, and $y_2$ = $m_2$ $J_2$+$b_2$, $J_2$ an estimate of the coordinates of the detected lines on the second part of the screen, $m_2$ a parameter of distance between the second part of the screen and the optical filter, and $b_2$ a parameter of the centering of the second part of the screen, the distance ($y_w$) being the mean of the distances $y_1$ and $y_2$, the parts (18a, 18b) being offset one toward the optical filter (17), the other toward the camera (19), the offset being $x_1$ in one direction and $x_2$ in the other direction, along the axis.

10. A machine guidance assembly (10) comprising a movable guidance system (11) and a stationary plane laser beam transmitter (15), the guidance system (11) including an optical filter (17) which has a receiving face exposed to the exterior and which can transmit light rays directed substantially in one direction and eliminate other light rays; a screen (18) receiving the filtered light; a digital camera (19) for capturing images resolved into pixels of said screen (18); a pre-processing member (30) that can select the pixels corresponding to an incident plane laser beam received by the guidance system (11), filtered and projected onto said screen (18), and can generate a detection response image; a line detector (40) generating, on the basis of the detection response image, by processing on the columns of pixels, an estimate (J) of the coordinates of the detected lines; and a locator (50) that receives the estimate of the coordinates of the detected lines and calculates values representative of columns of pixels on the basis of said estimate of the coordinates of the detected lines and parameters of the guidance system (11), and then calculates a distance ($y_w$) of the guidance system (11) from the plane laser beam in order to generate a control signal to minimize said distance ($y_w$).

# Figure 1

## Fig.2

## Fig.3

# Fig.4

Origin (0,0)

$y_1$

18a

19

18b

18

$y_2$

# Fig.5

$x_1$

Origin (0,0)

18a

19

21

16

$x_2$

18b

17

## Figure 6

## Figure 7

# Figure 8

Fig.9

Fig.10

Fig.11

# Figure 12

**EP 3 469 441 B1**

## RÉFÉRENCES CITÉES DANS LA DESCRIPTION

**Documents brevets cités dans la description**

- ES 2401509